# EUROPEAN PATENT APPLICATION

(11) **EP 2 645 372 A2**
(43) Date of publication of application: **02.10.2013**
(21) Application number: 13159453.3
(22) Date of filing: 15.03.2013
(51) Int. Cl.: G21C 17/108, G21C 19/20, G21D 1/00

(54) **Traveling reactor power monitoring system and method for controlling retracting a traveling probe**

(30) Priority: 27.03.2012 JP 2012072520
(71) Applicant: Kabushiki Kaisha Toshiba, Tokyo (JP)
(72) Inventor: Sato, Kei, Tokyo (JP); Miyazaki, Tadashi, Tokyo (JP); Sato, Toshifumi, Tokyo (JP)
(74) Representative: HOFFMANN EITLE

(57) **Abstract**

A traveling reactor power monitoring system includes a traveling reactor power monitoring system including a drive control unit configured to move a traveling probe in a guide tube by rotating a motor, and a proximity switch that generates a I stpreventing retraction signal when the travelling probe is detected by the proximity switch to exist at a predefined stop range in a shielding vessel. The drive control unit stops retracting the travelling probe when the 1 stpreventing retraction signal is generated by the proximity switch, and wipes out the 1 stpreventing retraction signal by detecting that the probe exists outside the predefined stop range on the basis of a probe information as a substitute for the 1 st preventing retracting signal output by the proximity switch.

## Description

### Cross-Reference to Related Application

This application is based upon and claims the benefit of priority from Japanese Patent Application No. 2012-072520, filed on March 27, 2012, the entire content of which is incorporated herein by reference.

### Field

The present disclosure relates to a traveling reactor power monitoring system that moves a traveling probe in a nuclear reactor by feeding and spooling a probe cable in the reactor. More particularly, the disclosure is directed to a traveling reactor power monitoring system that controls retracting the probe accurately.

### Background

At a Boiled Water Reactor (BWR) power plant, to measure neutron flux in a nuclear reactor, Local Power Range Monitors (LPRMs) are provided in the reactor. Fissile material provided at the electrode in the LPRMs fissions and releases ionized atoms as a result of being irradiated with neutrons. Neutron flux is obtained by measuring the ionized atoms.

However, the LPRMs are placed in the reactor constantly and are difficult to replace, and the sensitivity of the LPRMs declines with time because of consumption of the fissile material. Therefore, the sensitivity of the LPRMs needs to be calibrated at different times to measure neutron flux in the reactor precisely.

At a Pressurized Water Reactor (PWR) power plant, to measure neutron flux in a nuclear reactor, fixed neutron sensors are provided at the outer periphery of the reactor. But the sensitivity of these fixed neutron sensors also declines with time and needs to be calibrated at different times.

To calibrate the sensitivity of the LPRMs of BWR and fixed neutron sensors of the PWR, a traveling reactor power monitoring system is provided in the nuclear power plant. Generally, the traveling reactor power monitoring system in the BWR is referred to as a Traversing In-core Probe (TIP) monitoring system.

This TIP monitoring system moves a traveling probe, referred to asa TIP, in guide tubes provided in the reactor, and the TIP measures neutron flux in the proximity of the LPRMs while moving. By using measured neutron flux, the sensitivity of the LPRMs is calibrated.

At a PWR power plant, the traveling reactor power monitoring system referred to as a Flux Mapping System moves a traveling probe in the reactor, and the sensitivity of the fixed neutron sensors is calibrated by using measured neutron flux or gamma rays measured by the traveling probe.

For example, Japanese Patent Laid-open Publication No. 2002-71483 discloses a traveling reactor power monitoring system having a torque sensor attached to the motor shaft. That torque sensor measures the drive torque automatically.

Here, the travelling probe is radio activated by the neutron measuring operation. Therefore, the travelling probe is stored in a shielding vessel except during a neutron measuring operation. To prevent over retracting the travelling probe in this shielding vessel, a proximity switch is provided at the shielding vessel. This proximity switch detects a predefined stop range of the traveling probe in the shielding vessel, and generates a prevent retraction signal. The drive control unit stops retracting the traveling probe by this probe stop signal, and stores the travelling probe at the predefined stop range in the shielding vessel.

However, in a remote chance, if the proximity switch is in a poor condition or malfunctions and wrongly generates the prevent retraction signal, the drive control unit can not retract the traveling probe, and can not store the traveling probe in the shielding vessel. As a result, there is a possibility that repairing or replacing of the proximity switch is needed during a normal plant operation.

### SUMMARY

Accordingly, an aspect of the disclosed embodiments provides a traveling reactor power monitoring system that controls retracting the traveling probe accurately.

In accordance with the disclosed embodiments, a traveling reactor power monitoring system includes a drive control unit configured to move the traveling probe in the guide tube by rotating a motor, and a proximity switch that generates a 1 stpreventing retraction signal when the proximity switch detects that the travelling probe exists within a predefined stop range in a shielding vessel. The drive control unit stops retracting the travelling probe when the 1 st preventing retraction signal is generated by the proximity switch, and wipes out the 1 stpreventing retraction signal by detecting that the probe exists outside of the predefined stop range on the basis of a probe information as a substitute for the 1 st preventing signal output by the proximity switch.

Additional objects and advantages of the disclosed embodiments will be set forth in part in the description which follows, and in part will be clear from the description, or may be learned by practice of the embodiments. The objects and advantages of the embodiments will be realized and attained by the elements and combinations particularly pointed out in the appended claims.

It is to be understood that both the foregoing general description and the following detailed description are exemplary and explanatory only and are not restrictive.

### BRIEF DESCRIPTION OF THE DRAWINGS

The accompanying drawings, which are incorporated in and constitute a part of the specification, illustrate embodiments and together with the description serve to explain principles of the embodiments.

Figure 1 is a block schematic diagram illustrating a TIP monitoring system according to a first embodiment.

Figure 2 is a logic diagram illustrating controlling retraction of the probe according to the first embodiment.

Figure 3 is a logic diagram illustrating controlling retraction of the probe according to a second embodiment.

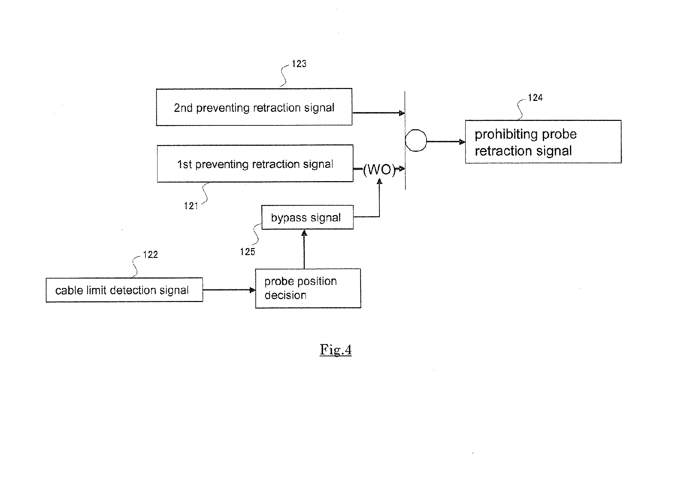

Figure 4 is a logic diagram illustrating controlling retraction of the probe according to a third embodiment.

Figure 5 is a block schematic diagram illustrating a moving mock probe device according to a fourth embodiment.

### DESCRIPTION OF THE EMBODIMENTS

[First embodiment]

Reference will now be made in detail to the present embodiments, examples of which are illustrated in the accompanying drawings. Wherever possible, the same reference numbers will be used throughout the drawings to refer to the same or like parts.

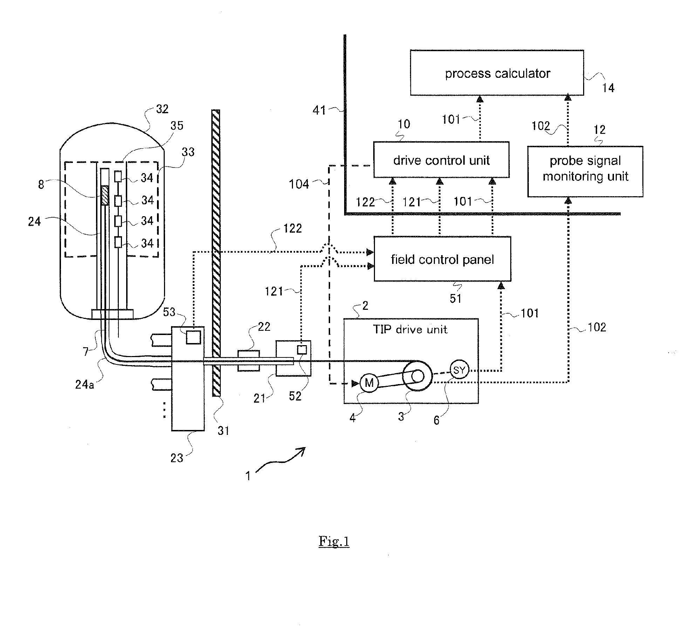

Fig.1 shows a general Boiled Water Reactor (BWR) power plant. At the BWR power plant, the traveling reactor power monitoring system is referred to as a Traversing In-core Probe (TIP) monitoring system 1. The TIP monitoring system 1 moves a traveling probe referred to as a TIP 8 to measure neutron flux in the reactor core.

Referring to Fig. 1, in a reactor container 31, a reactor pressure vessel 32 is stabilized. A reactor core 33 is a portion where the fission fuel is loaded in the reactor pressure vessel 32. A number of LPRMs 34 are provided in the reactor core 33. A number of guide tubes 24 are provided near the LPRMs 34 (Fig. 1 shows one guide tube 24). Each guide tube 24 and LPRMs 34 account for a sensor assembly 35.

A TIP monitoring system 1 includes a TIP drive unit 2, a probe cable 7, a TIP 8 (travelling probe), a process calculator 14, a drive control unit 10, a probe signal monitoring unit 12, a field control panel 51, a proximity switch 52, and a cable limit switch 53. The TIP drive unit 2 includes a storage reel 3, a motor 4, and a probe position signal generator 6.

The drive control unit 10, the probe signal monitoring unit 12, and the process calculator 14 may be provided in a central monitoring room 41.

As shown Fig. 1, the TIP drive unit 2 is provided outside of the reactor container 31. One edge of the probe cable 7 is connected to the TIP 8, and the storage reel 3 may store the probe cable 7. The motor 4 is provided to feed the probe cable 7 from the storage reel 3 and spool the probe cable 7 onto the storage reel 3 by rotating the storage reel 3. Between the storage reel 3 and the motor 4, gears and crutch may be provided.

The motor 4 can be connected to an inverter. The motor 4 receives supply power from the inverter to rotate at a speed indicated by a drive command 104.

The probe position signal generator 6 is provided to monitor the length of spooling the probe cable 7 onto the reel 3. The probe position signal generator 6 sends the monitored cable length as the probe position signal 101.

The drive control unit 10 is connected to the motor 4 and the indexing device 23 to send a drive command 104 to the motor 4 and send an indexing command to the indexing device 23 respectively.

The field control panel 51 is connected to the cable limit switch 53, the proximity switch 52, and the probe position signal generator 6 to receive the cable limit switch detecting signal 122, the 1 st preventing retraction signal 121, and the probe position signal 101 respectively. The drive control unit 10 is connected to the field control panel 51 to receive the cable limit switch detecting signal 122, the 1stpreventing retraction signal 121, and the probe position signal 101.

The TIP 8 may send a probe output signal 102 that indicates the measured neutron flux through a signal transmitting line in the probe cable 7. The TIP 8 is connected to the probe signal monitoring unit 12 to send the probe output signal 102 through the probe cable 7.

A shielding vessel 21 is provided outside of the reactor container 31. The shielding vessel 21 may store and keep within it the TIP 8. A valve assembly 22 may be provided outside of the reactor container 31 and inside of the shielding vessel 21. An indexing device 23 is provided in the reactor container 31. The shielding vessel 21, the valve assembly 22, and the indexing device 23 are connected by a pipe to move the TIP 8 to the indexing device 23 from the shielding vessel 21 through the valve assembly 22.

The valve assembly 22 may include a gas valve purging gas in the guide tubes 24 and a cutting valve cutting the pipe at an emergency situation. Furthermore, the valve assembly 22 can close the pipe without neutron monitoring.

The guide tubes 24 are connected to the indexing device 23. Each guide tube 24 extends to under the reactor pressure vessel 32, and curves upwards. Furthermore, each guide tube 24 penetrates the bottom of the reactor pressure vessel 32, and extends vertically into the reactor core 33.

In the central monitoring room 41, the drive control unit 10 is connected to the process calculator 14 to send the probe position signal 101 to the process calculator 14. Furthermore, the probe signal monitoring unit 12 is connected to the process calculator 14 to send the probe output signal 102 to the process calculator 14.

The proximity switch 52 is provided in the shielding vessel 21. When the TIP 8 exists at a predefined stop range in the shielding vessel 21, the proximity switch 52 outputs the 1stpreventing retraction signal 121. The proximity switch 52 is connected to the drive control unit 10 via the field control panel 51 to send the 1 st preventing retraction signal 121 to the drive control unit 10.

The cable limit switch 53 may be provided at the indexing device 23. The cable limit switch 53 outputs the cable limit switch detecting signal 122 when the probe exists at the side of reactor pressure vessel 32 in relation to the indexing device 23. The cable limit switch 53 is connected to the drive control unit 10 via the field control panel 51 to send the cable limit switch detecting signal 122 to the drive control unit 10.

At first, measuring neutron flux is described as follows. Controlling retracting the TIP 8 is described later.

Ordinarily, the TIP 8 is stored in the shielding vessel 21. At a time of measurement of neutron flux, the drive control unit 10 sends the drive command 104 to the motor 4. The motor 4 feeds the probe cable 7 from the storage reel 3, and inserts the TIP 8 to the indexing device 23 from the shielding vessel 21. Furthermore, the drive control unit 10 sends an indexing command to the indexing device 23. The indexing device 23 indexes the TIP 8 to a designated guide tube 24 in which to measure neutron flux.

The drive control unit 10 further drives the motor 4 and inserts the TIP 8 into the designated guide tube 24. The drive control unit 10 receives the probe position signal 101 from the probe position signal generator 6, and recognizes the insert position of the TIP 8 in the designated guide tube 24.

The TIP 8 measures neutron flux at predefined points during moving in the guide designated tube 24, and sends the probe output signal 102 to the probe signal monitoring unit 12 through the probe cable 7.

The process calculator 14 calculates the power distribution at each probe position in the reactor core by using the probe output signal 102 and the probe position signal 101, and calculates the value for calibrating the LPRMs 34.

After moving the TIP 8 to the predefined end point of the guide tube 24, the drive control unit 10 reverses motor 4 and spools the probe cable 7 onto the storage reel 4, and retracts the TIP 8 back to the indexing device 23. If it is necessary to measure neutron flux in another guide tube 24, the drive control unit 10 sends the indexing command 105 to the indexing device 23, and the indexing device 23 indexes the TIP 8 to another guide tube 24, and the drive control unit 10 moves the TIP 8 in the another guide tube 24.

After moving the TIP 8 in all designated guide tubes 24, the drive control unit 10 retracts the TIP 8 to the shielding vessel 21 by spooling the probe cable 7 onto the storage reel 3 and stores the TIP 8 in the shielding vessel 21.

In the shielding vessel, the proximity switch 52 detects the TIP 8 at a predefined stop range, and generates the 1stpreventing retraction signal 121. The drive control unit 10 stops retracting the TIP 8 upon receiving the 1stpreventing retraction signal 121.

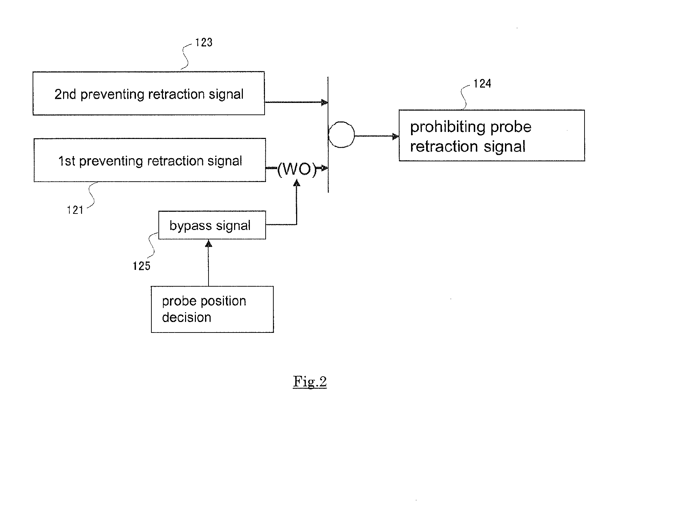

Furthermore, the driving control unit 10 determines the probe position by the probe position signal 101. When the probe (TIP 8) position exists at the predefined stop range, the driving control unit 10 may generate the 2ndpreventing retraction signal 123 as shown Fig.2. The driving control unit 10 may also stop a retracting operation by this 2ndpreventing retraction signal 123.

Next, a method for controlling retraction of the TIP 8 is described as follows. Fig.2 shows the inner logic of the drive control unit 10. This logic generates the prohibiting probe retraction signal 124 when the 1stpreventing retraction signal 121 or the 2ndpreventing retraction signal 123 is input. The drive control unit 10 stops the retracting operation of the TIP 8 when the prohibiting probe retraction signal 124 is generated.

Additionally, the drive control unit 10 determines the probe position by the probe position signal 101. This probe position signal 101 is probe information indicating the probe position as a substitute for a detection by the proximity switch 52 (for example if the proximity switch 52 is malfunctioning). If the probe position exceeds a predefined upper threshold, the drive control unit 10 sends the bypass signal 125 to the 1st preventing retraction signal 121. Here, this upper threshold may be set at a value indicating that the TIP 8 exists out of the shielding vessel 21.

When the 1st preventing retraction signal 121 is overridden or wiped out (WO) by the bypass signal 125, retracting of the TIP 8 is permitted. Therefore, even if the proximity switch 52 is malfunctioning, the TIP 8 can be properly retracted by overriding or wiping out the 1st preventing retractionsignal and allowing further retraction of the TIP 8.

In addition, in a proper working condition of the proximity switch 52, the 1stpreventing retraction signal 121 is not sent when the TIP 8 is outside of the predefined stop range. Thus, regardless of the bypass signal 125, the retracting operation is permitted. And the alarm is not generated because the above mentioned wipe out (WO) is not executed.

Furthermore, in the remote case that the 2ndpreventing retraction signal 123 is not generated in a case of malfunctioning of the drive control unit 10, the 1 stpreventing retraction signal 121 prevents the retracting operation.

In this embodiment, it is possible to prevent the impossibility of retracting the TIP 8 by determining the probe position by the probe position signal 101 1 as probe information as a substitute for an output of the proximity switch 52.

The proximity switch 52 is provided at a near side of the reactor pressure vessel 32 and is difficult to repair and replace compared to the drive control unit 10. Therefore, by putting priority on the drive control unit 10 above the proximity switch 52, the frequency of repairing and replacing the proximity switch 52 is decreased, and exposure dosage of utility workers is decreased.

[Second embodiment]

This embodiment differs from the first embodiment in that the drive control unit 10 sends the bypass signal 125 on the basis of a probe inserting operation. Information indicating the probe inserting operation is obtained by the drive command 104 of the drive control unit 10, or an operation command to the drive control unit 10 from a control desk.

When the 1stpreventing retraction signal 121 is generated despite the inserting operation of the TIP 8, there is a possibility that the proximity switch 52 is in a poor or malfunctioning condition.

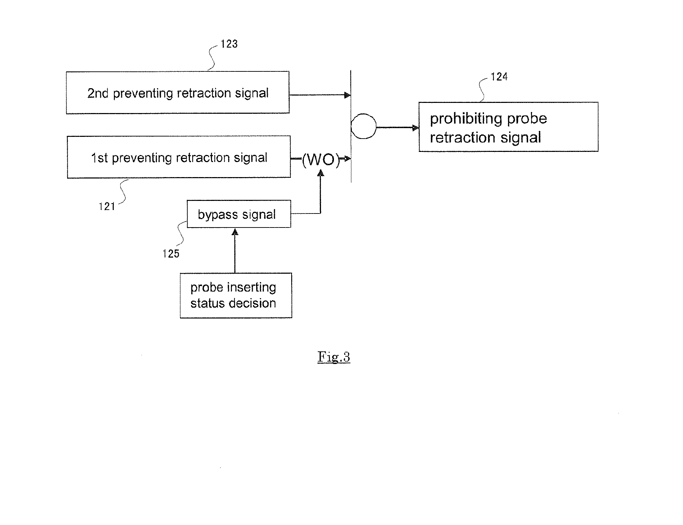

Fig.3 shows the inner logic of the drive control unit 10 in this second embodiment. The drive control unit 10 detects the inserting status of the TIP 8 by the drive command 104. The drive command 104 can be used as probe information indicating the probe position as a substitute for an output from the proximity switch 52.

When the drive control unit 10 determines the inserting operation, the drive control unit 10 sends the bypass signal 125 to the 1stpreventing retraction signal 121. And the 1stpreventing retraction signal 121 is overridden or wiped out (WO). As a result, the impossibility of retracting the TIP 8 due to a poor working condition of the proximity switch 52 is prevented. Furthermore, when the wipe out (WO) is executed, the drive control unit 10 may generate an alarm at the central monitoring room 41.

Here, the proximity switch 52 in a good working condition also generates the 1stpreventing retraction signal 121 at a predefined stop range in the shielding vessel 21. Therefore, at the starting inserting operation, after the TIP 8 passes the predefined stop range from the stored point in the shielding vessel 21 or after a predefined time has passed, the drive control unit 10 generates the bypass signal 125.

In addition, in the good working condition of the proximity switch 52, the 1stpreventing retraction signal 121 is not sent at inserting operation, the retracting operation is permitted despite the bypass signal 125 being sent. Furthermore, the alarm is not generated because the wipe out (WO) is not executed.

In this embodiment, it is possible to prevent the impossibility of retracting the TIP 8 in a poor working condition of the proximity switch 52 by inputting the bypass signal 125 on the basis of the inserting status of the TIP 8.

[Third embodiment]

This embodiment differs from the first embodiment in that the bypass signal 125 is generated on the basis of a cable limit switch detecting signal 122 from the cable limit switch 53. The cable limit switch detecting signal 122 indicates that the TIP 8 exists at the side of the reactor pressure vessel 32. The cable limit switch 53 can be a simple probe detector that is provided at the guide tube 23 and sends the probe detecting signal when the TIP 8 exists at the side of the reactor pressure vessel 32. This probe detecting signal can then be used as probe information indicating the probe position as a substitute for an output of the proximity switch 52.

When the TIP 8 exists at the side of pressure vessel 32, if the proximity switch 52 generates the 1stpreventing retraction signal 121, there is a possibility that the proximity switch 52 is in a poor working condition or is malfunctioning, since the TIP 8 is not actually at the predefined stop range.

By receiving the cable limit switch detecting signal 122 from the cable limit switch 53, the drive control unit 10 determines that the TIP 8 exists at the side of pressure vessel 32 (outside of the predefined stop range). The drive control unit 10 then sends the bypass signal 125 to the 1stpreventing retraction signal 121.

In the condition that the 1stpreventing retraction signal 121 is generated by the proximity switch 52 in a poor or malfunctioning working condition, the 1 stpreventing retraction signal 121 is wiped out (WO) by bypass signal 125. As a result, the impossibility of retracting the TIP 8 is prevented. Furthermore, at the bypass operation, the drive control unit 10 may generate an alarm at central monitoring room 41.

In this embodiment, it is possible to prevent the impossibility of retracting the TIP 8 by determining the position of the TIP 8 by the cable limit switch 53. On the basis of the cable limit switch 52, not only at the inserting operation but also at a retracting operation, the bypass signal 125 can be input.

Furthermore, the 1stpreventing retraction signal 121 is overridden or wiped out only by receiving the cable limit switch detecting signal 122. Thus, the composition of the TIP monitoring system 1 is more simplified than the first embodiment determining the probe position by the probe position signa1101.

[Fourth embodiment]

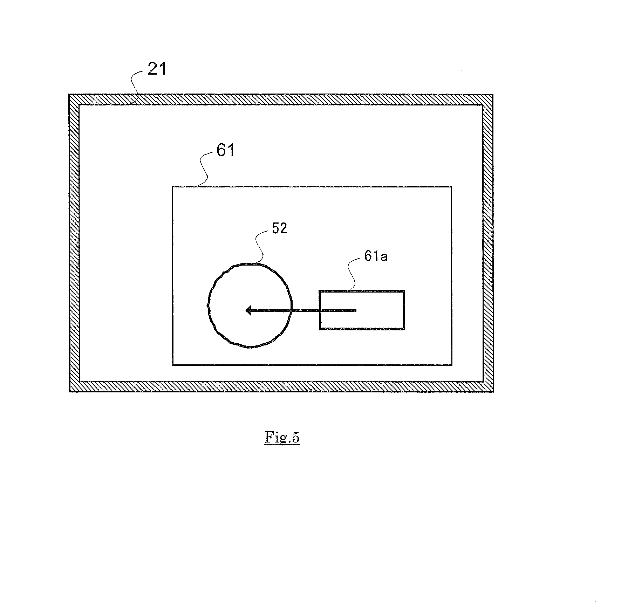

This embodiment differs from the first embodiment in that, as shown in Fig. 5, amoving mock probe device 61 is provided in the shielding vessel 21. As shown Fig.5, the moving mock probe device 61 may move a metallic piece 61a as a mock travelling probe in the shielding vessel 21.

When the drive control unit 10 continues to send the 2ndpreventing retraction signal 123 but the proximity switch 52 does not send the 1stpreventing retraction signal 121 and the probe position indicates the TIP 8 is out of the predefined stop range in the shielding vessel21, there is a possibility that the drive control unit 10 is in a poor working condition.

In this case, the moving mock probe device 61 moves the metallic piece 61a close to the proximity switch 52, and the proximity switch 52 generates the signal 121 by the metallic piece 61a. When the 1stpreventing retraction signal 121 is generated by the metallic piece 61a, the poor working condition of the drive control unit 10 is detected.

In this embodiment, it is possible to determine the poor working condition of the drive control unit 10 by moving the metallic piece 61a. As a result, utility workers do not need to check the drive control unit 10 or the proximity switch 52 directly.

The above described embodiments can be modified in various different ways as pointed out below. At a Pressurized Water Reactor (PWR) power plant, fixed neutron sensors are provided at an outer periphery of the reactor as a substitute for LPRMs 34. Thus, the above mentioned TIP monitoring system 1 can be applied to the PWR power plant as a traveling reactor power monitoring system.

Furthermore, at some PWR power plants, guide tubes 24 penetrate an upper portion of the reactor pressure vessel, and the traveling probe moves to the core bottom from the core top. Additionally, the traveling power monitoring system can connect a gamma thermo meter as the traveling probe. This gamma thermo meter can measure gamma rays in the reactor core during moving. In this case, the traveling power monitoring system can measure gamma rays as reactor power.

Obviously, numerous modifications and variations of the embodiments are possible in light of the above teachings. It is therefore to be understood that within the scope of the appended claims, the embodiments may be practiced otherwise than as specifically described herein.

## Claims

1. A traveling reactor power monitoring system for moving a traveling probe connected to an edge of a probe cable in a guide tube,comprising:
a drive control unit configured to move the traveling probe in the guide tube by rotating a motor; and
a proximity switch that generates a 1 stpreventing retraction signal when the travelling probe is detected by the proximity switch to exist at a predefined stop range in a shielding vessel;
wherein:
the drive control unit stops retracting the travelling probe when the 1 stpreventing retraction signal is generated by the proximity switch, and wipes out the 1 stpreventing retraction signal by detecting that the probe exists outside of the predefined stop range on the basis of a probe information as a substitute for the 1 st preventing retracting signal output by the proximity switch.

2. The traveling reactor power monitoring system of claim 1,further comprising:
a probe position signal generator that generates a probe position signal indicating a travelling probe position;
wherein:
the drive control unit wipes out the 1 stpreventing retraction signal by detecting that the probe exists outside of the predefined stop range by using the probe position signal as the probe information as the substitute for the 1 st preventing retracting signal output by the proximity switch.

3. The traveling reactor power monitoring system of claim 2,wherein:
the drive control unit generates a 2ndpreventing retraction signal that stops retracting the travelling probe by detecting that the travelling probe exists at the predefined stop range by using the probe position signal.

4. The traveling reactor power monitoring system of claim 1,wherein:
the drive control unit wipes out the 1 stpreventing retraction signal by detecting an inserting operation of the travelling probe as the probe information as the substitute for the 1 st preventing retracting signal output by the proximity switch.

5. The traveling reactor power monitoring system of claim 1,further comprising:
a probe detector that generates a probe detecting signal when the travelling probe exists at a side of a reactor pressure vessel;
wherein:
the drive control unit wipes out the 1 stpreventing retraction signal by detecting the probe detecting signal as the probe information as the substitute for the 1 st preventing retracting signal output by the proximity switch.

6. The traveling reactor power monitoring system of claim 5,wherein:
the probe detector is a cable limit switch that detects that the probe exists at the side of the reactor on the basis of an indexing device.

7. The traveling reactor power monitoring system of claim 1,wherein:
the drive control unit generates an alarm when the 1 stpreventing retraction signal is wiped out.

8. A method for controlling retracting a traveling probe connected to an edge of a probe cable in a guide tube, comprising:
moving a traveling probe in the guide tube by rotating a motor;
generating, by a proximity switch, a 1 stpreventing retraction signal by the proximity switch detecting that the probe exists at a predefined stop range in a shielding vessel; and
wiping out the 1 stpreventing retraction signal by detecting that the travelling probe exists outside the predefined stop range by using a probe information as a substitute for the 1 st preventing retracting signal output by the proximity switch.

9. The method for controlling retracting a traveling probe connected to an edge of a probe cable in a guide tube of claim 8, further comprising:
generating a probe position signal indicating a travelling probe position;
wherein:
the wiping out the 1 st preventing retraction signal wipes out the 1 st preventing retraction signal by detecting that the probe exists outside of the predefined stop range by using the probe position signal as the probe information as the substitute for the 1 st preventing retracting signal output by the proximity switch.

10. The method for controlling retracting a traveling probe of claim 9, further comprising:
generating a 2nd preventing retraction signal that stops retracting the travelling probe by detecting that the travelling probe exists at the predefined stop range by using the probe position signal.

11. The method for controlling retracting a traveling probe of claim 8, wherein:
the wiping out the 1 st preventing retraction signal wipes out the 1 st preventing retraction signal by detecting an inserting operation of the travelling probe as the probe information as the substitute for the 1 st preventing retracting signal output by the proximity switch.

12. The method for controlling retracting a traveling probe of claim 8, further comprising:
generating a probe detecting signal when the travelling probe exists at a side of a reactor pressure vessel;
wherein:
the wiping out the 1 st preventing retraction signal wipes out the 1 st preventing retraction signal by detecting the probe detecting signal as the probe information as the substitute for the 1 st preventing retracting signal output by the proximity switch.

13. The method for controlling retracting a traveling probe of claim 12, wherein:
the probe detecting signal is generated by a cable limit switch that detects that the probe exists at the side of the reactor on the basis of an indexing device.

14. The method for controlling retracting a traveling probe of claim 9, further comprising:
generating an alarm when the 1st preventing retraction signal is wiped out.
